# EUROPÄISCHE PATENTSCHRIFT

(11) **EP 1 756 590 B1**
(45) Veröffentlichungstag und Bekanntmachung des Hinweises auf die Patenterteilung: **16.10.2013**
(21) Anmeldenummer: 05755901.5
(22) Anmeldetag: 21.05.2005
(51) Int. Cl.: F16C 19/18, F16C 41/00, F16C 33/78, G01P 3/44

(54) **RADLAGERANORDNUNG MIT EINEM ENCODER UND MIT EINEM SENSOR**
WHEEL BEARING ARRANGEMENT COMPRISING AN ENCODER AND A SENSOR
ENSEMBLE ROULEMENT DE ROUE COMPORTANT UN CODEUR ET UN CAPTEUR

(30) Priorität: 28.05.2004 DE 102004026199
(43) Veröffentlichungstag der Anmeldung: 28.02.2007
(73) Patentinhaber: Schaeffler Technologies AG & Co. KG, 91074 Herzogenaurach (DE)
(72) Erfinder: HÄPP, Alexander, 97461 Lendershausen (DE); WALTER, Wilhelm, 97490 Poppenhausen (DE)
(86) Internationale Anmeldenummer: PCT/DE2005/000933
(87) Internationale Veröffentlichungsnummer: WO 2005/116664

(56) Entgegenhaltungen:
- US-A- 5 046 867
- US-A- 5 293 124
- US-A- 5 898 388
- US-A- 5 969 518
- US-A1- 2005 047 692
- PATENT ABSTRACTS OF JAPAN Bd. 2000, Nr. 19, 5. Juni 2001 (2001-06-05) & JP 2001 056236 A (UCHIYAMA MFG CORP), 27. Februar 2001 (2001-02-27)

## Beschreibung

### Gebiet der Erfindung

Die Erfindung betrifft eine Radlageranordnung mit wenigstens einem Encoder, mit mindestens einem Sensor, mit einer konzentrisch zur Rotationsachse angeordneten Dichtung und mit einer in der Radlageranordnung rotationsbeweglich gelagerten Nabe, wobei:
- ein Radialflansch der Nabe radial von der Rotationsachse weg gerichtet ist
- die Dichtung zumindest einen radialen Ringspalt um die Nabe seitens des Radialflansches abdichtet,
- die Dichtung wenigstens einen Abdeckring aus einem nicht ferromagnetischen Material sowie zumindest eine elastische erste Dichtlippe aufweist,
- die erste Dichtlippe an dem Abdeckring fest ist und an dem Encoder dichtend anliegt,
- der Encoder innenseitig der Dichtung angeordnet und mit der Nabe um die Rotationsachse rotationsbeweglich ist.

### Hintergrund der Erfindung

Eine derartige Radlageranordnung ist in US 4,864,231 und in US5046867 beschrieben. In der Radlagerung ist eine Nabe drehbar gelagert. An der Nabe ist ein Radialflansch für die Befestigung eines Fahrzeugrades vorgesehen. Die Dichtungsanordnung liegt dabei an der Seite der Radlageranordnung, die zum Fahrzeugrad weist. Der in die Radlageranordnung integrierte Sensor liegt dem Encoder mit einem Luftspalt gegenüber. Dazu ist der Sensor in ein Durchgangsloch in dem Außenring der Radlagerung montiert. Bei der Montage des Sensors und beim Auswechseln des Sensors bei einer Reparatur besteht die Gefahr, dass Verschmutzung in das innere der Dichtung und somit in den Wälzkontakt zwischen den Wälzkörpern und die Wälzkörper gelangt. Die an dem Encoder anliegende Dichtung wird bei kürzerer oder längerer Laufzeit der Lagerung von Schmutz aus der Umwelt unterwandert und undicht. In beiden Fällen ist die Lebensdauer der Radlagerung nachteilig verkürzt.

### Zusammenfassung der Erfindung

Die Aufgabe der Erfindung ist daher, eine Radlageranordnung der gattungsgemäßen Art zu schaffen, die besser gegen Umwelteinflüsse zu schützen.

Die Aufgabe ist mit den Merkmalen des Anspruches 1 für eine Radlageranordnung mit wenigstens einem Encoder, mit mindestens einem Sensor, mit einer Dichtung und mit einer in der Radlageranordnung um eine Rotationsachse der Radlagerung drehbar gelagerten Nabe gelöst. Die erfindungsgemäße Radlageranordnung weist folgende Merkmale und Ausgestaltungen auf:
Die Erfindung lässt sich auf alle bekannten die Typen von Radlagerungen, wie z. B. mit feststehenden Außenring(en) und in dem Außenring drehbeweglich gelagerten Naben anwenden. In der Radlageranordnung ist wenigstens eine Innenlaufbahn und eine Außenlaufbahn für Wälzkörper der Radlagerung ausgebildet, wobei die Außenlaufbahn mit der Nabe relativ zu der Innenlaufbahn am Außenring um die Rotationsachse rotationsbeweglich ist. Das betrifft u. a. zweireihige- und vierreihige Radlagersätze mit Rollen oder Kugeln als Wälzkörper, insbesondere Radlager in Schrägrollen- oder Schrägkugellagerausführung.

Die Radlagersätze weisen wahlweise einteilige Lagerringe mit Laufbahnen für alle der Reihen, geteilte Lagerringe, oder für jede Reihe einen Lagerring sowie Kombinationen dieser vorgenannten Gestaltungen auf. Innenringe sitzen vorzugsweise auf der Nabe, wobei die Lagerung vorzugsweise mittels eines Bördelbordes an der Nabe oder unter der Anwendung aller denkbaren anderen Arten an der Nabe spielfrei angestellt sind. Die Laufbahnen für Wälzkörper sind an geteilten Innen- bzw. Außenringen oder an einstückig mit wenigstens zwei Laufbahnen versehenen Ringen ausgebildet. Die Außenringe sitzen in einem Radträger, der seinerseits fahrzeugseitig befestigt ist. Der oder die Innenringe sitzen auf der Nabe. Alternativ sind eine oder mehr Laufbahnen direkt an der Nabe ausgebildet. Es gibt auch Außenringe in Form von Radträgern, die einen Flansch aufweisen. An einem derartigen Außenring ist wenigstens eine der Innenlaufbahnen direkt ausgebildet. Der Flansch an dem Außenring ist für die fahrzeugseitige Befestigung der Radlagerung. Der Radialflansch an der Nabe ist zur Befestigung eines oder mehrerer Fahrzeugräder an der Nabe.

Die Dichtungseinheit schützt seitens des Radialflansches das Innere der Radlagerung gegen Umwelteinflüsse von außen. Unter dem Inneren der Radlagerung sind zumindest der radiale Ringsspalt zwischen dem Außenring und Innenring und die darin angeordneten Wälzkörper, Käfige zum Führen der Wälzkörper sowie Bauteile von Sensoreinrichtungen des Radlagers und ggf. weitere hauptsächlich radial zwischen dem Innen- und Außenring angeordnete Elemente des Lagers zu verstehen.

Die Dichtung ist konzentrisch zur Rotationsachse angeordnet und weist wenigstens einen Abdeckring sowie mindestens zwei elastische Dichtlippen auf. Der Abdeckring deckt zumindest den signalaktiven Teil des Encoders ab, der im Inneren der Dichtung angeordnet ist. Der Abdeckring ist:
- zumeist rotationssymmetrisch und dabei kappenartig mit Loch ausgebildet,
- umgreift die Nabe und sitzt drehfest am Radträger, vorzugsweise jedoch drehfest am Außenring,
- bevorzugt aus einem nicht ferromagnetischen Blech oder ist alternativ auch aus einem oder mehreren nicht ferromagnetischen Werkstoffen, wie Kunststoffen und Leichtmetallen,
- vorzugsweise durch Kaltumformen, wie Tiefziehen, Pressen, Prägen bzw. Kombinationen aus diesen Verfahren hergestellt,
- weist einen hohlzylindrischen Sitz auf, mit dem der Abdeckring vorzugsweise auf dem Außenring aber alternativ auch in dem Außenring oder an dem Radträger sitzt,
- verläuft zwischen dem Sensor und dem von dem Abdeckring abgedeckten signalaktiven Encoder, wobei der Abdeckring vorzugsweise mit einem hohlzylindrischen ersten Ringabschnitt zwischen dem Sensor und dem Encoder verläuft und dabei der erste Ringabschnitt von dem Sitz abgeht,
- weist vorzugsweise einen Scheibenabschnitt auf, der sich radial zwischen dem ersten Ringabschnitt und einem zweiten Ringabschnitt erstreckt, wobei der Scheibenabschnitt das Innere des Radlagers axial abdeckt und dem Radialflansch axial gegenüber liegt,
- weist den zweiten Ringabschnitt auf, der hohlzylindrisch ausgebildet und von dem ersten Ringabschnitt umgeben ist.

Die Dichtlippen sind ringförmig ausgebildet und an dem Abdeckring vorzugsweise durch Anspritzen befestigt bzw. auf den Abdeckring aufvulkanisiert. Eine erste der Dichtlippen vorzugsweise radial in Richtung der Rotationsachse aber alternativ auch axial gegen den Encoder dichtend vorgespannt. Eine Ausgestaltung der Erfindung sieht vor, dass die erste Dichtlippe zweifach dichtend an dem Encoder anliegt, wobei ein freies Ende der Dichtlippe axial dichtend an dem Steg des Encoders und der dem freien Ende vorangehende Teil der Dichtlippe radial an dem Sitz anliegt. Weiter ist die Dichtlippe wahlweise mit einer ringförmigen Feder vorgespannt, die zumindest einen radial gegen den Sitz anliegenden Teil der Dichtlippe gegen den Sitz vorspannt. Alternativ sind auch zwei erste Dichtlippen vorgesehen, von denen eine zum Beispiel axial an dem Steg und die andere an dem Sitz des Encoders anliegt. Die zweite Dichtlippe liegt dichtend an dem radial von der Nabe abgehenden Teil des Radialflansches an.

Eine Ausgestaltung der Erfindung sieht vor, dass die erste Dichtlippe an dem zweiten Ringabschnitt fest ist. Die zweite Dichtlippe oder vorzugsweise zwei zweite Dichtlippen sind bevorzuget an dem Scheibenabschnitt des Abdeckbleches fest und liegen an einer axialen Planfläche des Radialflansches oder an der durch wenigsten einen Radius beschriebenen Kehle zwischen Nabe und Radialflansch an. Die Dichtlippen sind in der Regel mit Vorspannung gegen die Dichtflächen am Encoder oder am Radialflansch montiert. Die Vorspannung beträgt in der Praxis in der Regel 0,2 mm.

Die an dem Radialflansch anliegende Dichtlippe ist in der Dichtungsfunktion der an dem Encoder anliegenden Dichtlippe vorgeschaltet, so dass zwischen den Dichtlippen ein Ringraum ausgebildet ist. Der Ringraum ist wahlweise mit Fett befüllt. Die Dichtlippen sind aus einem elastischen Dichtungswerkstoff wie Elastomeren bzw. aus mehreren Komponenten gleicher oder unterschiedlicher Materialien.

Der Encoder ist mit der Nabe relativ zu dem zweiten Ring um die Rotationsachse rotationsbeweglich und besteht im Wesentlichen vorzugsweise einteilig aus dem Sitz, einem Radialsteg zwischen dem Sitz und einem weiteren hohlzylindrisch ausgebildeten signalaktiven Encoderabschnitt. Der Encoder ist also an dem rotierenden Lagerring oder direkt an der Nabe mittels eines vorzugsweise aus Blech geformten Trägers aus Steg und Sitz gehalten. Der Sitz ist hohlzylindrisch ausgebildet und direkt auf die Nabe oder vorzugsweise auf einen Innenring aufgepresst. Die gegen den Encoder dichtend anliegende Dichtlippe liegt vorzugsweise an einer umfangsseitigen Dichtfläche des Sitzes an. Der aktive Encoderabschnitt ist konzentrisch zur Rotationsachse sowie zumindest teilweise radial zwischen dem ersten Ringabschnitt und dem zweiten Ringabschnitt angeordnet und verläuft dabei vorzugsweise um den Sitz. Das bevorzugte Material für den Encoder ist Blech.

Der Begriff Encoder steht für einen oder mehrere ein- bzw. mehrteilige Encoder, der oder die umfangsseitig der Rotationsachse angeordnet ist/sind. Unter signalaktiv sind in diesem Sinne alle signalgebenden (impulsgebenden) und signalreflektierenden Anordnungen und Ausbildungen von Encodern zu verstehen. Der signalaktive Teil des Encoders ist deshalb wahlweise ein Impulsring aus Blech mit Freiräumen, die in Umfangsrichtung von Stegen begrenzt sind oder ist ein umfangsseitig wellenförmig ausgebildeter Blechring. Alternativ dazu ist der Encoder aus wechselseitig polarisiertem Material oder aus Trägermaterial mit magnetisierbaren Zusätzen. Beispiele für solche Materialien sind Kunststoffe, denen magnetisierbares Material zugesetzt ist, oder Kunststoffe, die magnetisierbare Einsätze aufweisen. Alternativ ist der Encoder aus magnetisiertem Metall. Der Encoder ist deshalb entweder ein Blechelement aus dem Impulsgeber, dem Steg und aus dem Sitz, oder alternativ ein auf dem Blechträger aus Sitz und Steg angeordneter Impulsgeber mit wechselnder Polarisation.

Durch den stirnseitigen Abstand des bevorzugt scheibenförmigen Abschnittes des Abdeckringes zu der Stirnseite des Außenringes ist in der Dichtung axial zwischen der Abdeckkappe und der Stirnseite des Außenringes zusätzlicher Platz für den Encoder geschaffen. Der Encoder kann in seinen radialen und axialen Abmessungen somit großzügiger gestaltet werden und steht radial in den axialen Freiraum zwischen der Abdeckkappe und dem Außenring hinein. Die Anordnung des Encoders außerhalb des Ringspaltes bietet den Vorteil, dass mehr Platz für die Anordnung der Dichtungen dieser Dichtungsanordnung zur Verfügung steht. Die Sensoreinheit mit einem radial nach außen ausgerichteten Encoder beansprucht, im Vergleich zu axial ausgerichteten Encodern, weniger radiale Bauhöhe. Der Gewinn an Bauraum kann zusätzlich für eine optimale Gestaltung der Dichtung ausgenutzt werden, da zwischen den Lagerringen ohnehin nur wenig radialer Bauraum für den Einbau einer Dichtung zur Verfügung steht.

Der Sensor ist außenseitig der Dichtung dem Encoder gegenüberliegend angeordnet, wobei sich der Abdeckring aus dem nicht ferromagnetischen Material zumindest zwischen dem Encoder und dem Sensor erstreckt. Ein oder mehrere radial außerhalb des Abdeckringes angeordnete(r) Sensor(en) greift/greifen die Signale des Encoders, unbeachtlich möglicher anders gerichteter Streuungen dieser Signale, hauptsächlich radial ab oder sendet/senden Signale radial in Richtung des Encoders. Dazu ist der Encoder mit seiner alternativ signalnehmenden, signalreflektierenden oder signalerzeugenden Seite vorzugsweise radial nach außen ausgerichtet. Der oder die Sensor(en) sitzen entweder an dem zur rotierenden Nabe nicht drehbeweglichen Lagerring/Radträger oder sind auf andere Weise zum Fahrzeug fest. Die Montage des Sensors erfolgt im Einbau- und Reparaturfall nicht ins Innere der Dichtung hinein, sondern separat an die Dichtung, so dass die Gefahr der Verschmutzung des Lagers nicht besteht.

Die Dichtungsanordnung ist vorzugsweise als Kassettendichtung ausgebildet. Die wesentlichen Elemente der Dichtungsanordnung sind dabei zu einer Baueinheit aus Trägern, Abdeckkappe, Dichtung und Encoder zusammengefasst. Die Lagerhaltung, der Transport und die Montage in die Lagereinheit sind damit vereinfacht. Die Dichtungsanordnung ist gegen Dichtungsanordnungen nach dem Stand der Technik austauschbar, ohne dass bauraumbedingte Veränderungen an der Konstruktion der Lagereinheit vorgenommen werden müssen.

Die aktive und radial nach außen gewandte Fläche des Encoders ist vorzugsweise in Form der Mantelfläche eines Kreiszylinders ausgebildet oder bildet eine (Außen)Mantelfläche eines Kreiskegelstumpfes. Die radial nach außen gerichtete aktive (Ober)Fläche des Encoders ist vorzugsweise an einem einteiligen Encoder in der Form eines rotationssymmetrischen hohlen Zylinders oder Kegelstumpfes ausgebildet oder mehrteilig aus mehreren Segmenten an einem derartigen Zylinder/Kegelstumpf zusammengesetzt. Die wesentlichen Vorteile eines Encoders mit der Mantelfläche eines Kreiskegelstumpfes sind eine gleichmäßige Magnetfeldstärke am gesamten Umfang und eine hohe Genauigkeit der Teilung der Polarisierung des magnetisierten Encoders. Der Konus- bzw. Kegelwinkel des Encoders ist vorzugsweise 5°< = α < = 15°.

### Beschreibung der Zeichnungen

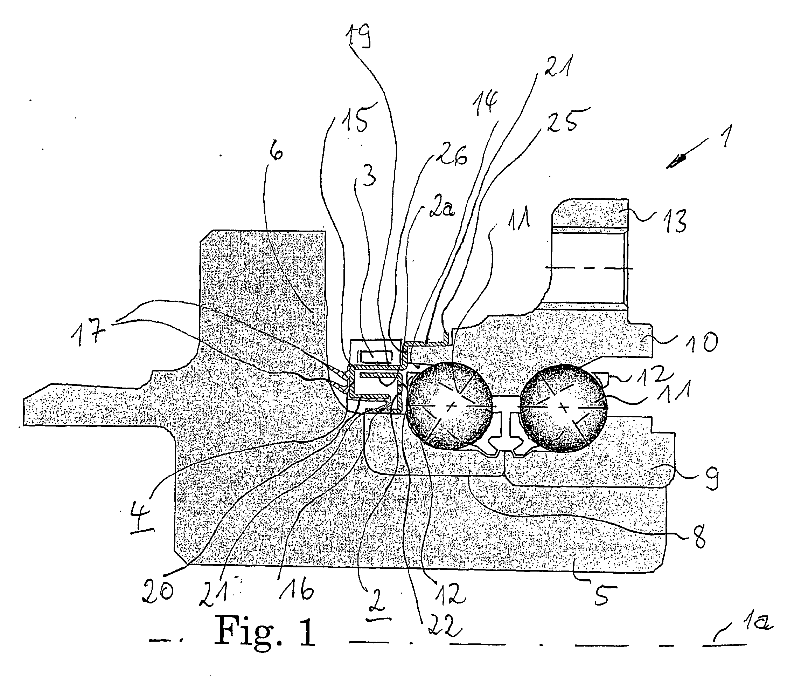

Figur 1 zeigt eine Radlageranordnung 1 in einer Schnittdarstellung längs der Rotationsachse 1 a. Die Radlageranordnung 1 weist wenigstens einen Encoder 2, mindestens einen Sensor 3, eine konzentrisch zur Rotationsachse 1 a angeordnete Dichtung 4 und eine in der Radlageranordnung 1 rotationsbeweglich gelagerten Nabe 5 auf. Die Nabe 5 weist einen in diesem Fall einteilig mit der Nabe 5 ausgebildeten radial von der Rotationsachse 1 a weg gerichteten Radialflansch 6 auf. Der Radialflansch 6 ist für die im Bild linksseitige Befestigung eines nicht dargestellten Fahrzeugrades. Die Nabe 5 und damit das Fahrzeugrad sind mittels eines Radlagers 7 um die Rotationsachse 1 a drehbeweglich gelagert. Das Radlager 7 ist in diesem Fall aus zwei Innenringen 8 und 9, aus einem Außenring 10 und aus Wälzkörpern 11 in Käfigen 12 gebildet. Der Außenring 10 ist als Radträger ausgebildet und weist dazu einen Flansch 13 zur fahrzeugseitigen Befestigung des Rades über die Radlageranordnung 1 auf. An dem Radträger sind in diesem Fall direkt zwei Innenlaufbahnen für die Wälzkörper 11 in Form von Kugeln ausgebildet.

Die Dichtung 4 dichtet zumindest den radialen Ringspalt 14 zwischen den Innenringen 8 und dem Außenring 10 seitens des Radialflansches 6 ab und weist einen Abdeckring 15 aus einem nicht ferromagnetischen Material, eine erste elastische Dichtlippe 16 sowie zwei elastische zweite Dichtlippen 17 auf.

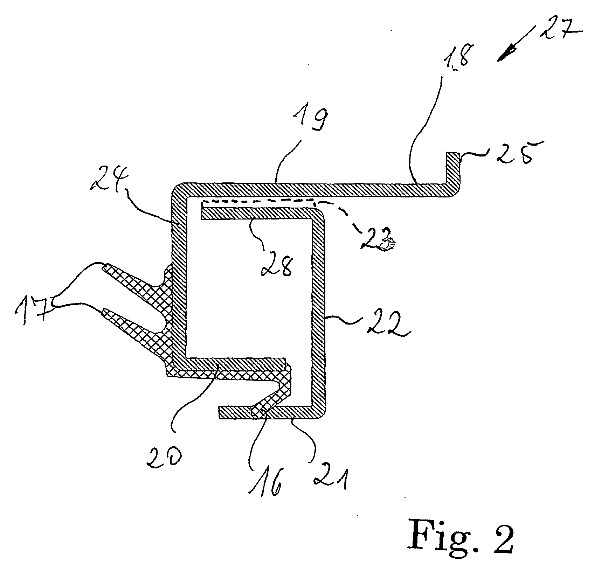

Der Abdeckring 15 ist als Blechformteil napfförmig ausgebildet und sitzt mit dem einem hohlzylindrischen Sitz 18 auf einem Außenabschnitt des Außenringes 10. Der hohlzylindrische Sitz weist einen radialen Kragen 25 auf, der als Ergebnis aus dem Ziehvorgang für den Napf ein Hilfsmittel für das Aufpressen der Dichtung 4 auf den Außenring 10 ist und an dem sich dabei das Werkzeug zum Aufpressen abstützt. An den Sitz 18 schließt sich zunächst ein Axialanschlag 26 an dem dann ein erster Ringabschnitt 19 folgt. In Figur 2 ist eine Dichtung 27 dargestellt, bei der der Sitz 18 alternativ unmittelbar axial in den ersten Ringabschnitt 19 übergeht. Die Anordnung nach Figur 1 hat den Vorteil, dass der Sensor 3 geschützt in die Ringnut 28 eingepasst ist. Der erste Ringabschnitt 19 ist konzentrisch zur Nabe 5 angeordnet und verläuft radial zwischen dem Encoder 2 und dem Sensor 3. An den ersten Ringabschnitt 19 schließt sich axial von dem Ringspalt 14 aus gesehen ein Scheibenabschnitt 24 an, der zumindest teilweise axial zwischen dem Ringspalt 14 und dem Radialflansch 6 ausgebildet ist. Von dem Scheibenabschnitt 24 aus setzt sich der Abdeckring 15 mit einem zweiten Ringabschnitt 20 fort. Der zweite Ringabschnitt 20 ist konzentrisch zur Nabe 5 angeordnet und umfangsseitig von dem signalaktiven Teil 2a des Encoders 2 und von dem ersten Ringabschnitt 19 umgeben.

Der Encoder 2 ist größtenteils innenseitig der Dichtung 4 angeordnet und mit der Nabe 5 um die Rotationsachse 1 a rotationsbeweglich. Dazu ist der Encoder 2 mit einem hohlzylindrischen und dabei um die Nabe 5 und um einen der Innendringe 8 verlaufenden sowie zur Nabe 5 bzw. dem Innenring 8 festen Sitz 21 zur Nabe 5 verdrehfest. Der signalaktive Teil 2a des Encoders ist wahlweise ein einteilig mit dem Sitz 21 und dem radialen Steg 22 ausgebildeter Signalgeber aus Blech oder, wie in Figur 2 gestrichelt angedeutet, ein Encoder 23, der auf einem Trägerblech 28 mit dem Sitz 21 sowie mit dem Steg 22 fest ist.

Die erste Dichtlippe 16 ist an dem Abdeckring 15 fest und liegt dichtend an dem Sitz 21 an. Die an dem Encoder 2 anliegende Dichtlippe 16 ist an dem zweiten Ringabschnitt 20 fest. Die vorgeschaltete Dichtlippen 17 sind an dem Scheibenabschnitt 24 fest und liegen dichtend an dem Radialflansch 6 an.

**Bezugszeichen**

| | | | |
|---|---|---|---|
| 1 | Radlageranordnung | 14 | Ringspalt |
| 1a | Rotationsachse | 15 | Abdeckring |
| 2 | Encoder | 16 | Dichtlippe |
| 2a | signalaktiver Teil | 17 | Dichtlippe |
| 3 | Sensor | 18 | Sitz |
| 4 | Dichtung | 19 | Ringabschnitt |
| 5 | Nabe | 20 | Ringabschnitt |
| 6 | Radialflansch | 21 | Sitz |
| 7 | Radlager | 22 | Steg |
| 8 | Innenring | 23 | Encoder |
| 9 | Innenring | 24 | Scheibenabschnitt |
| 10 | Außenring | 25 | Kragen |
| 11 | Wälzkörper | 26 | Axialanschlag |
| 12 | Käfig | 27 | Dichtung |
| 13 | Flansch | 28 | Trägerblech |

## Patentansprüche

1. Radlageranordnung (1) mit wenigstens einem Encoder (2), mit mindestens einem Sensor (3), mit einer konzentrisch zur Rotationsachse (1a) angeordneten Dichtung (4, 27) und mit einer in der Radlageranordnung (1) rotationsbeweglich gelagerten Nabe (5), wobei:
- ein Radialflansch (6) der Nabe (5) radial von der Rotationsachse (1 a) weg gerichtet ist
- die Dichtung (4, 27) zumindest einen radialen Ringspalt (14) um die Nabe (5) seitens des Radialflansches (6)abdichtet,
- die Dichtung (4, 27) wenigstens einen Abdeckring (15) aus einem nicht ferromagnetischen Material sowie zumindest eine elastische erste Dichtlippe (16) aufweist,
- die erste Dichtlippe (16) an dem Abdeckring (15) fest ist und an dem Encoder (2) dichtend anliegt,
- zumindest ein signalaktiver Teil (2a) des Encoders (2) ist innenseitig der Dichtung (4, 27) angeordnet und mit der Nabe (5) um die Rotationsachse (1a) rotationsbeweglich ist,
**dadurch gekennzeichnet, dass**
- die Dichtung (4, 27) zumindest eine an dem Radialflansch (6) dichtend anliegende zweite Dichtlippe (17) aufweist und
- der Sensor (3) außenseitig der Dichtung (4, 27) dem Encoder (2) gegenüberliegend angeordnet ist und dabei Abdeckring (15) sich zumindest zwischen dem Encoder (2) und dem Sensor (3) erstreckt.

2. Radlageranordnung nach Anspruch 1, bei der der Abdeckring (15) aus Blech ist.

3. Radlageranordnung nach Anspruch 1, mit wenigstens einem ersten Ringabschnitt (19) an dem Abdeckring (15), wobei der erste Ringabschnitt (19) konzentrisch zur Nabe (5) angeordnet ist und radial zwischen dem Encoder (2) und dem Sensor (3) verläuft.

4. Radlageranordnung nach Anspruch 1, mit einem ersten Scheibenabschnitt (24) an dem Abdeckring (15), wobei sich der Scheibenabschnitt (24) axial von dem Ringspalt (14) aus gesehen an den ersten Ringabschnitt (19) anschließt und zumindest teilweise axial zwischen dem Ringspalt (14) und dem Radialflansch (6) ausgebildet ist.

5. Radlageranordnung nach Anspruch 1, mit einem zweiten Ringabschnitt (20) an dem Abdeckring (15), wobei sich der Abdeckring (15) von dem Scheibenabschnitt (24) aus mit dem zweiten Ringabschnitt (20) fortsetzt und dabei der zweite Ringabschnitt (20), konzentrisch zur Nabe (5) angeordnet, umfangsseitig von dem ersten Ringabschnitt (19) umgeben ist.

6. Radlageranordnung nach Anspruch 5, bei der der zweite Ringabschnitt (20) axial zwischen dem Ringspalt (14) und dem Radialflansch (6) verläuft.

7. Radlageranordnung nach Anspruch 5, bei der die erste Dichtlippe (16) an dem zweiten Ringabschnitt (20) fest ist.

8. Radlageranordnung nach Anspruch 7, bei der der Encoder (2) mit einem hohlzylindrischen und dabei um die Nabe (5) verlaufenden sowie zur Nabe (5) festen Sitz (18) zur Nabe (5) verdrehfest ist, wobei die erste Dichtlippe (16) an dem Sitz (18) dichtend anliegt.

9. Radlageranordnung nach Anspruch 8, bei der der Encoder (2) ein konzentrisch zur Nabe (5) angeordnetes, hohlzylindrisches sowie signalaktives Teil (2a) aufweist, wobei das Teil (2a) konzentrisch zur Rotationsachse (1 a) sowie zumindest teilweise radial zwischen dem ersten Ringabschnitt (19) und dem zweiten Ringabschnitt(20) angeordnet ist und dabei um den Sitz (21) verläuft.

10. Radlageranordnung nach Anspruch 9, bei dem der Sitz (21) und der signalaktive Teil (2a) einteilig aus Blech gebildet sind.

11. Radlageranordnung nach Anspruch 9, bei dem der signalaktive Teil (2a) auf einem Trägerblech fest ist, wobei das Trägerblech einteilig mit dem Sitz (21) versehen ist.

12. Radlageranordnung nach Anspruch 8, bei der der Sitz (21) auf einem zur Nabe (5) festen Innenring (8) der Radlageranordnung (1) sitzt, wobei der Innenring (8) wenigstens eine Außenlaufbahn für Wälzkörper (11) aufweist.

13. Radlageranordnung nach Anspruch 1 oder 8, bei der der Abdeckring (15) an einem Außenring (10) der Radlageranordnung (1) fest ist, wobei der Außenring (10) eine Innenlaufbahn für Wälzkörper (11) aufweist.

14. Radlageranordnung nach Anspruch 8, bei der die zweite Dichtlippe (17) an dem Scheibenabschnitt (24) fest ist.

## Claims

1. Wheel bearing arrangement (1) having at least one encoder (2), having at least one sensor (3), having a seal (4, 27) which is arranged concentrically with respect to the rotational axis (1a), and having a hub (5) which is mounted in the wheel bearing arrangement (1) so as to be rotationally moveable, with:
- a radial flange (6) of the hub (5) being aligned radially away from the rotational axis (1a),
- the seal (4, 27) sealing off at least one radial annular gap (14) around the hub (5) at the side of the radial flange (6),
- the seal (4, 27) having at least one covering ring (15), which is made from a non-ferromagnetic material, and at least one elastic first sealing lip (16),
- the first sealing lip (16) being fixed to the covering ring (15) and bearing sealingly against the encoder (2),
- at least one signal-active part (2a) of the encoder (2) being arranged at the inside of the seal (4, 27) and being rotationally moveable about the rotational axis (1a) with the hub (5),
**characterized in that**
- the seal (4, 27) has at least one second sealing lip (17) which bears sealingly against the radial flange (6), and
- the sensor (3) is arranged at the outside of the seal (4, 27) and opposite the encoder (2), and the covering ring (15) extends at least between the encoder (2) and the sensor (3).

2. Wheel bearing arrangement according to Claim 1, in which the covering ring (15) is made from sheet metal.

3. Wheel bearing arrangement according to Claim 1, having at least one first annular section (19) on the covering ring (15), with the first annular section (19) being arranged concentrically with respect to the hub (5) and running radially between the encoder (2) and the sensor (3).

4. Wheel bearing arrangement according to Claim 1, having a first disk section (24) on the covering ring (15), with the disk section (24) adjoining the first annular section (19), and being formed at least partially axially between the annular gap (14) and the radial flange (6), as viewed axially from the annular gap (14).

5. Wheel bearing arrangement according to Claim 1, having a second annular section (20) on the covering ring (15), with the second annular section (20) of the covering ring (15) proceeding from the disk section (24) thereof, and the second annular section (20), arranged concentrically with respect to the hub (5), being surrounded at the peripheral side by the first annular section (19).

6. Wheel bearing arrangement according to Claim 5, in which the second annular section (20) runs axially between the annular gap (14) and the radial flange (6).

7. Wheel bearing arrangement according to Claim 5, in which the first sealing lip (16) is fixed to the second annular section (20).

8. Wheel bearing arrangement according to Claim 7, in which the encoder (2) is rotationally fixedly joined to the hub (5) by means of a hollow cylindrical seat (18) which runs around the hub (5) and is fixed to the hub (5), with the first sealing lip (16) bearing sealingly against the seat (18).

9. Wheel bearing arrangement according to Claim 8, in which the encoder (2) has a hollow cylindrical signal-active part (2a) which is arranged concentrically with respect to the hub (5), with the part (2a) being arranged concentrically with respect to the rotational axis (1a) and at least partially radially between the first annular section (19) and the second annular section (20), and running around the seat (21).

10. Wheel bearing arrangement according to Claim 9, in which the seat (21) and the signal-active part (2a) are formed in one piece from sheet metal.

11. Wheel bearing arrangement according to Claim 9, in which the signal-active part (2a) is fixed to a metal support plate, with the metal support plate being provided in one piece with the seat (21).

12. Wheel bearing arrangement according to Claim 8, in which the seat (21) is seated on an inner ring (8), which is fixed to the hub (5), of the wheel bearing arrangement (1), with the inner ring (8) having at least one outer raceway for rolling bodies (11).

13. Wheel bearing arrangement according to Claim 1 or 8, in which the covering ring (15) is fixed to an outer ring (10) of the wheel bearing arrangement (1), the outer ring (10) having an inner raceway for rolling bodies (11).

14. Wheel bearing arrangement according to Claim 8, in which the second sealing lip (17) is fixed to the disk section (24).

## Revendications

1. Arrangement de palier de roue (1) comprenant au moins un codeur (2), comprenant au moins un capteur (3), comprenant une garniture d'étanchéité (4, 27) disposée de manière concentrique autour de l'axe de rotation (1a) et comprenant un moyeu (5) monté en mobilité rotationnelle dans l'arrangement de palier de roue (1), dans lequel :
- une bride radiale (6) du moyeu (5) est orientée dans le sens radial en s'éloignant de l'axe de rotation (1a),
- la garniture d'étanchéité (4, 27) réalise l'étanchéité d'au moins un interstice annulaire (14) autour du moyeu (5) du côté de la bride radiale (6),
- la garniture d'étanchéité (4, 27) présente au moins une bague de protection (15) en un matériau non ferromagnétique ainsi qu'au moins une première lèvre d'étanchéité (16) souple,
- la première lèvre d'étanchéité (16) est fixe sur la bague de protection (15) et repose hermétiquement contre le codeur (2),
- au moins une pièce de signalisation active (2a) du codeur (2) est disposée du côté intérieur de la garniture d'étanchéité (4, 27) et peut effectuer un mouvement de rotation avec le moyeu (5) autour de l'axe de rotation (1a),
**caractérisé en ce que**
- la garniture d'étanchéité (4, 27) présente au moins une deuxième lèvre d'étanchéité (17) qui repose hermétiquement contre la bride radiale (6) et
- le capteur (3) est disposé du côté extérieur de la garniture d'étanchéité (4, 27) à l'opposé du codeur (2) et la bague de protection (15) s'étend ainsi au moins entre le codeur (2) et le capteur (3).

2. Arrangement de palier de roue selon la revendication 1, dans lequel la bague de protection (15) est en tôle.

3. Arrangement de palier de roue selon la revendication 1, comprenant au moins une première portion de bague (19) sur la bague de protection (15), la première portion de bague (19) étant disposée de manière concentrique par rapport au moyeu (5) et s'étendant dans le sens radial entre le codeur (2) et le capteur (3).

4. Arrangement de palier de roue selon la revendication 1, comprenant une première portion de disque (24) sur la bague de protection (15), la portion de disque (24), vue dans le sens axial depuis l'interstice annulaire (14), se rattachant à la première portion de bague (19) et étant configurée au moins partiellement axiale entre l'interstice annulaire (14) et la bride radiale (6).

5. Arrangement de palier de roue selon la revendication 1, comprenant au moins une deuxième portion de bague (20) sur la bague de protection (15), la bague de protection (15) se poursuivant avec la deuxième portion de bague (20) depuis la portion de disque (24) et la deuxième portion de bague (20), disposée de manière concentrique par rapport au moyeu (5), étant ainsi entourée par la première portion de bague (19) du côté de son contour.

6. Arrangement de palier de roue selon la revendication 5, dans lequel la deuxième portion de bague (20) s'étend dans le sens axial entre l'interstice annulaire (14) et la bride radiale (6).

7. Arrangement de palier de roue selon la revendication 5, dans lequel la première lèvre d'étanchéité (16) est fixe sur la deuxième portion de bague (20).

8. Arrangement de palier de roue selon la revendication 7, dans lequel le codeur (2) est fixé en rotation solidaire par rapport au moyeu (5) avec un logement (18) cylindrique creux qui s'étend ainsi autour du moyeu (5) et qui est aussi fixe par rapport au moyeu (5).

9. Arrangement de palier de roue selon la revendication 8, dans lequel le codeur (2) présente une pièce de signalisation active (2a) cylindrique creuse disposée de manière concentrique autour du moyeu (5), la pièce (2a) étant disposée de manière concentrique par rapport à l'axe de rotation (1a) et au moins partiellement radiale entre la première portion de bague (19) et la deuxième portion de bague (20) et s'étendant ainsi autour du logement (21).

10. Arrangement de palier de roue selon la revendication 9, dans lequel le logement (21) et la pièce de signalisation active (2a) sont réalisés d'une seule pièce en tôle.

11. Arrangement de palier de roue selon la revendication 9, dans lequel la pièce de signalisation active (2a) est fixée sur une tôle porteuse, la tôle porteuse formant un seul bloc avec le logement (21).

12. Arrangement de palier de roue selon la revendication 8, dans lequel le logement (21) repose sur une bague intérieure (8) fixe par rapport au moyeu (5) de l'arrangement de palier de roue (1), la bague intérieure (8) présentant au moins une bande de roulement extérieure pour des corps de roulement (11).

13. Arrangement de palier de roue selon la revendication 1 ou 8, dans lequel la bague de protection (15) est fixe sur une bague extérieure (10) de l'arrangement de palier de roue (1), la bague extérieure (10) présentant une bande de roulement intérieure pour des corps de roulement (11).

14. Arrangement de palier de roue selon la revendication 8, dans lequel la deuxième lèvre d'étanchéité (17) est fixe sur la portion de disque (24).
